# EUROPÄISCHE PATENTSCHRIFT

(11) **EP 2 045 068 B1**
(45) Veröffentlichungstag und Bekanntmachung des Hinweises auf die Patenterteilung: **20.08.2014**
(21) Anmeldenummer: 08015916.3
(22) Anmeldetag: 10.09.2008
(51) Int. Cl.: B29C 49/00, B29C 49/04, B29D 23/18, B29C 49/12, B29C 49/78, B29C 49/42, B29C 33/30

(54) **Verfahren und Vorrichtung zur Herstellung von Rohren aus thermoplastischem Kunststoff mit Querprofilierung**
Device and method for producing pipes made of thermoplastic with transverse profiling
Procédé et dispositif de fabrication de tuyaux en plastique thermoplastique dotés d'un profilage transversal

(30) Priorität: 05.10.2007 DE 102007047662
(43) Veröffentlichungstag der Anmeldung: 08.04.2009
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Albrecht

(56) Entgegenhaltungen:
- EP-B1- 0 764 516
- DE-U1- 20 011 668

## Beschreibung

Die Erfindung betrifft ein Verfahren nach dem Oberbegriff des Anspruches 1 und eine Vorrichtung nach Anspruch 3.

Ein derartiges Verfahren und eine derartige Vorrichtung sind beispielsweise aus der EP 0 764 516 A2 (entspr. US-PS 5,693,347) bekannt. Mittels der Transportvorrichtung werden die zur Herstellung des Well-Rohres jeweils eingesetzten Formabschnitts-Hälften am stromabwärtigen Ende der Formstrecke aus dieser entnommen und zum Beginn der Formstrecke am stromaufwärtigen Ende der Vorrichtung zurückgeführt und dort wieder in die Formstrecke eingeschleust. Jedes Mal wenn eine vom normalen Wellrohr-Querschnitt abweichende Form des Rohres, insbesondere eine Muffe, erzeugt werden soll, wird ein Paar von zusätzlichen Formabschnitts-Hälften aus einer stromabwärts der Formstrecke befindlichen Parkposition mittels der Transportvorrichtung zusätzlich in die Formstrecke eingeschleust. Wenn diese zusätzlichen Formabschnitts-Hälften die Formstrecke durchlaufen haben, werden sie von der Transportvorrichtung aus der Formstrecke entnommen und zu den Parkpositionen zurücktransportiert. Anschließend fährt die Transportvorrichtung wieder zum stromabwärtigen Ende der Formstrecke zurück und entnimmt dort das nächste Paar von Formabschnitts-Hälften und transportiert diese zum Beginn der Formstrecke und schleust sie dort in die Formstrecke ein. Diese Ausgestaltung hat dazu geführt, dass die Produktionsgeschwindigkeit dieser Vorrichtungen begrenzt ist.

Aus DE 200 11 668 U1 ist eine Vorrichtung zur Herstellung von Rohren aus thermoplastischem Kunststoff bekannt. Die Formabschnitts-Hälften werden im Kreislauf geführt. An eine Rücklaufstrecke schließen sich zwei Schienenabschnitte an, auf denen zusätzlich Formabschnitts-Hälften geparkt werden können. Wie der Transport der Formabschnitts-Hälften erfolgt, ist dieser Veröffentlichung nicht entnehmbar.

Der Erfindung liegt daher die Aufgabe zugrunde, ein Verfahren der gattungsgemäßen Art so weiterzubilden, dass die Produktionsgeschwindigkeit erhöht werden kann, und eine Vorrichtung zur Durchführung des Verfahrens anzugeben.

Diese Aufgabe wird bei einem Verfahren der gattungsgemäßen Art durch die Merkmale im Kennzeichnungsteil des Anspruches 1 gelöst. Dadurch, dass die Entnahme der zusätzlichen Formabschnitts-Hälften aus der Formstrecke und deren Transport zu ihrer Parkposition entfällt, kann der Gesamtproduktionsprozess, also die Extrusionsgeschwindigkeit und die Geschwindigkeit der Formabschnitte auf der Formstrecke deutlich gesteigert werden, da der Transport der Formabschnitts-Hälften entgegen der Produktionsrichtung im Wesentlichen geradlinig verläuft und damit mit sehr hoher Geschwindigkeit ablaufen kann.

Die der Erfindung zugrundeliegende Aufgabe wird durch die Vorrichtung nach Anspruch 3 gelöst, wobei Anspruch 4 eine bekannte Ausgestaltung für die Haupt-Transportvorrichtung wiedergibt. Die Hilfs-Transportvorrichtung nach Anspruch 5 kann im Prinzip gleich ausgebildet sein wie die Haupt-Transportvorrichtung.

Weitere Merkmale, Vorteile und Einzelheiten der Erfindung ergeben sich aus der Beschreibung eines Ausführungsbeispiels anhand der Zeichnung. Es zeigt:
- Fig. 1: eine Vorrichtung nach der Erfindung zur Herstellung von Rohren in Draufsicht,
- Fig. 2: eine Stirnansicht der Vorrichtung gemäß dem Sichtpfeil II in Fig. 1 in teilweise aufgebrochener Darstellung,
- Fig. 3 bis 7: die Vorrichtung nach der Erfindung in von Fig. 1 abweichen- den Betriebsstellungen in Draufsicht.

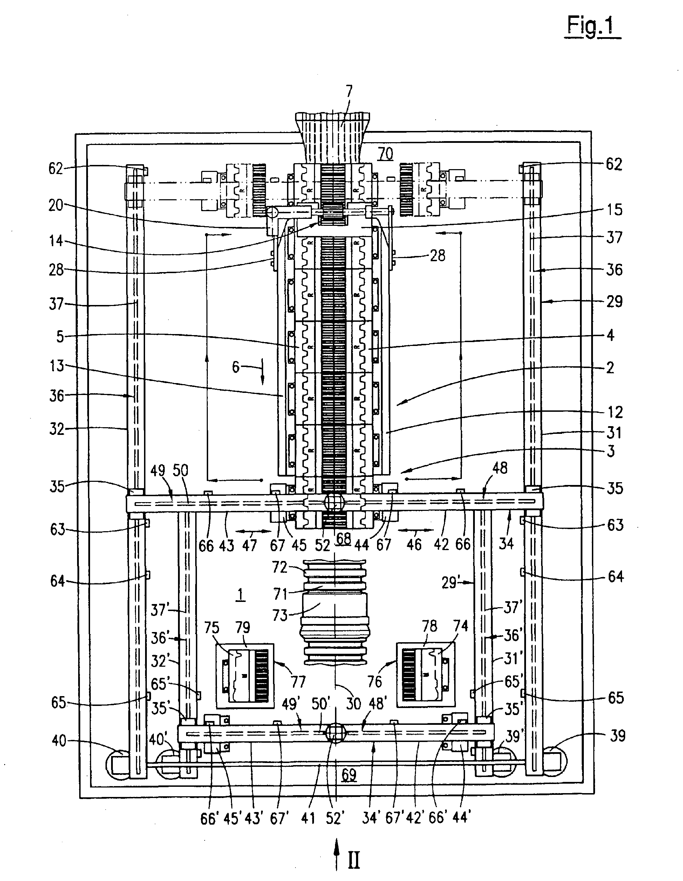

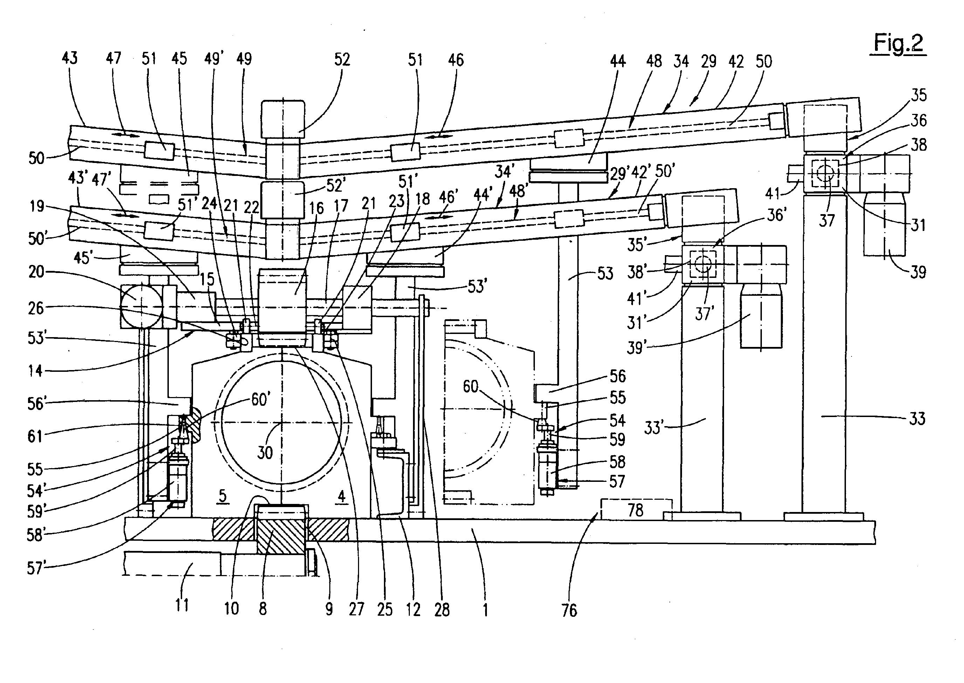

Die Fig. 1 und 2 zeigen eine Vorrichtung zur Herstellung von Rohren aus thermoplastischem Kunststoff mit Querprofilierung. Diese Vorrichtung weist eine Grundplatte 1 auf, auf der sich eine Formstrecke 2 befindet. Auf dieser Formstrecke 2 werden Formabschnitte 3 aneinandergereiht, die jeweils aus zwei Formabschnitts-Hälften 4, 5 bestehen. Solange die Formabschnitts-Hälften 4, 5 jeweils paarweise unter Bildung eines Formabschnitts 3 aneinanderliegen, und solange benachbarte Formabschnitte 3 unter Bildung einer Form aneinanderliegen, bewegen sie sich geradlinig entsprechend einer Produktionsrichtung 6 auf der Grundplatte 1. Zum kontinuierlichen Antrieb der durch die Formabschnitte 3 gebildeten Form ist unmittelbar hinter einem Spritzkopf 7 eines Extruders ein unteres Antriebsritzel 8 vorgesehen, das durch eine Ausnehmung 9 in der Grundplatte 1 hindurchragt und in ein an der jeweiligen Unterseite der Formabschnitts-Hälften 4, 5 ausgebildetes Zahnprofil 10 eingreift. Das untere Antriebsritzel 8 ist drehfest auf einer Antriebswelle 11 angebracht, die unterhalb der Grundplatte 1 gelagert ist und von einem nicht dargestellten Getriebe-Motor angetrieben wird. Die Formabschnitts-Hälften 4, 5 werden auf der Formstrecke 2 jeweils durch Führungsleisten 12, 13 geführt bzw. zusammengehalten, die in dem der Grundplatte 1 benachbarten Bereich der Formabschnitts-Hälften 4, 5 an diesen angreifen.

Oberhalb der Grundplatte 1 und oberhalb der Form ist eine Gegenlagerung 14 vorgesehen. Diese weist eine Basisplatte 15 auf, auf der ein oberes Antriebsritzel 16 gelagert ist. Dieses obere Antriebsritzel 16 ist ebenfalls drehfest an einer Antriebswelle 17 angebracht, die beidseitig in Lagern 18, 19 gelagert ist, die auf der Basisplatte 15 befestigt sind. Die Antriebswelle 17 wird von einem Getriebe-Motor 20 angetrieben, der an dem benachbarten Lager 19 angebracht ist. An der Unterseite der Basisplatte 15 sind Abstützrollen 21 mit horizontaler Drehachse 22 gelagert, die sich auf an der Oberseite jeder Formabschnitts-Hälfte 4, 5 ausgebildeten Abstützflächen 23 abstützen, wodurch die Lage der Gegenlagerung 14 zu den Formabschnitts-Hälften 4, 5 definiert wird. An der Unterseite der Basisplatte 15 sind weiterhin Führungsrollen 24 mit vertikaler Drehachse 25 gelagert, die seitlich an Führungsflächen 26 angreifen, die ebenfalls an der Oberseite der Formabschnitts-Hälften 4, 5 ausgebildet sind. Mittels dieser Führungsrollen 24 werden zwei einen Formabschnitt 3 bildende Formabschnitts-Hälften 4, 5 in ihrem oberen Bereich geführt bzw. zusammengehalten. Das obere Antriebsritzel 16 greift zwischen den Abstützflächen 23 bzw. den Führungsflächen 26 in ein Zahnprofil 27 ein, das an den Oberseiten der Formabschnitts-Hälften 4, 5 ausgebildet ist. Über das obere Antriebsritzel 16 wird nur 1/3 bis 1/4 des Betrages der Vorschubkraft auf die Formabschnitte 3 übertragen, der durch das untere Antriebsritzel 8 auf die Formabschnitte 3 ausgeübt wird. Die Gegenlagerung 14 ist in auf der Grundplatte 1 angebrachten, vertikal von dieser hochstehenden Drehmoment-Stützen 28 abgestützt, die das vom Getriebe-Motor 20 auf die Gegenlagerung 14 ausgeübte Drehmoment auffangen.

Oberhalb der Grundplatte 1 ist eine Haupt-Transportvorrichtung 29 für die Formabschnitts-Hälften 4, 5 vorgesehen. Diese Transportvorrichtung 29 ist nach Art eines Brückenkranes aufgebaut. Sie weist zwei parallel zur Transportrichtung 6, zur Mittel-Längs-Achse 30 der Formabschnitte 3 und zur Grundplatte 1 und parallel zueinander verlaufende Führungsschienen 31, 32 auf. Diese sind oberhalb der Gegenlagerung 14 angeordnet und über Stützen 33 gegenüber der Grundplatte 1 abgestützt. Auf den Führungsschienen 31, 32 ist eine Transport-Brücke 34 über Lauf-Wagen 35 abgestützt. Die Verschiebung der Transport-Brücke 34 auf den Führungsschienen 31, 32 erfolgt mittels Linearantrieben 36, die in der konkreten Ausgestaltung als Spindelantriebe ausgebildet sind. Diese Linearantriebe 36 weisen demzufolge auf den Führungsschienen 31, 32 angeordnete Gewindespindeln 37 auf, auf denen Gewindemuttern 38 angeordnet sind, die wiederum an den Lauf-Wagen 35 befestigt sind. Die Gewindespindeln 37 werden jeweils über einen Getriebe-Motor 39, 40 angetrieben, wobei diese beiden Getriebe-Motoren 39, 40 über eine horizontale und quer zu den Führungsschienen 31, 32 verlaufende Kuppel-Welle 41 zwangs-synchronisiert sind. Die beiden Gewindespindeln 37 werden also exakt drehzahlgleich angetrieben, so dass die Transport-Brücke 34 verkantungsfrei auf den Führungsschienen 31, 32 verfahren wird. Die Transport-Brücke 34 weist zwei Brücken-Abschnitte 42, 43 auf, die jeweils von den Führungsschienen 31, 32 aus gesehen aufeinanderzu zur Grundplatte 1 hin geneigt verlaufen. Der Abstand der Brücke 34 von der Grundplatte 1 ist also in ihrer Mitte, senkrecht oberhalb der Mittel-Längs-Achse 30 am geringsten. Auf den beiden Brücken-Abschnitten 42, 43 ist jeweils ein Transport-Wagen 44, 45 verfahrbar angeordnet, der in der jeweiligen Verfahrrichtung 46 bzw. 47 mittels eines Linearantriebs 48 bzw. 49 verschiebbar ist. Diese Linearantriebe 48, 49 bestehen im Wesentlichen aus jeweils einer im jeweiligen BrückenAbschnitt 42 bzw. 43 gelagerten Gewindespindel 50, die in eine Gewindemutter 51 am jeweiligen Transport-Wagen 44 bzw. 45 eingreift. Die beiden Gewindespindeln 50 werden von einem gemeinsamen Getriebe-Motor 52 angetrieben. Die Getriebe-Motoren 39, 40 und der Getriebe-Motor 52 sind umsteuerbare Motoren, also für Vorwärts- und Rückwärtslauf geeignet. An den Transport-Wagen 44 und 45 ist jeweils ein Transportarm 53 angebracht, der sich senkrecht nach unten erstreckt. An jedem Transportarm 53 ist eine Haltevorrichtung 54 für eine Formabschnitts-Hälfte 4 bzw. 5 angebracht. Ihr zugeordnet ist an jeder Formabschnitts-Hälfte 4 bzw. 5 ein Halte-Widerlager 55 ausgebildet. Jede Haltevorrichtung 54 weist eine obere Anlage 56 auf, gegen die von unten ein Halte-Widerlager 55 angedrückt wird. Zur Haltevorrichtung 54 gehört weiterhin eine Spannvorrichtung 57, die im Wesentlichen aus einem pneumatischen oder hydraulischen Kolben-Zylinder-Antrieb 58 besteht. An der Kolbenstange 59 dieses Antriebs 58 ist ein Verriegelungszapfen 60 ausgebildet, der bei entsprechender Betätigung des Antriebs 58 in eine Verriegelungsausnehmung 61 an der Unterseite des Halte-Widerlagers 55 eingreift und gleichzeitig das Widerlager 55 gegen die Anlage 56 drückt. In der in Fig. 2 links dargestellten Position ist die Haltevorrichtung 54 fest mit dem Halte-Widerlager 55 der benachbarten Formabschnitts-Hälfte 4 bzw. 5 verriegelt; letztere ist also fest mit dem Transportarm 53 verbunden.

An den Führungs-Schienen 31, 32 sind Näherungsschalter, von denen nur einige Näherungsschalter 62, 63, 64, 65 dargestellt sind, angeordnet, die bei Annäherung der Transport-Brücke 34 deren Position repräsentierende Signale an eine zentrale Steuerung abgeben, die nicht dargestellt ist. An der Transport-Brücke 34 sind ebenfalls Näherungsschalter 66, 67 angebracht, die eine innere bzw. eine äußere Position des jeweiligen Transport-Wagens 44, 45 repräsentierende Signale an die zentrale Steuereinheit abgeben.

Außer der Haupt-Transportvorrichtung 29 ist eine Hilfs-Transportvorrichtung 29' vorgesehen, die gleich aufgebaut ist wie die Haupt-Transportvorrichtung 29 mit dem Unterschied, dass ihre zwischen den Führungs-Schienen 31, 32 angeordneten Führungs-Schienen 31', 32' sich nur vom stromabwärtigen Ende 68 der Formstrecke bis zu dem in Produktionsrichtung 6 weiter stromabwärts gelegenen Ende 69 der Vorrichtung erstrecken. Da der Aufbau ansonsten mit dem der Haupt-Transportrichtung 29 übereinstimmt, werden alle gleichen oder gleichartigen Teile mit identischen Bezugsziffern wie bei der Haupt-Transportvorrichtung 29 bezeichnet, jedoch mit einem hochgesetzten Strich markiert. Es kann insoweit vollständig auf die bisherige Beschreibung verwiesen werden. Wie sich weiterhin aus Fig. 1 ergibt, ist die Transport-Brücke 34' der Hilfs-Transportvorrichtung 29' - in Produktionsrichtung 6 gesehen - stromabwärts der Transport-Brücke 34 der Haupt-Transportvorrichtung 29 angeordnet.

Aus dem Spritzkopf 7 des Extruders werden zwei Schläuche aus warmplastischem Kunststoff extrudiert, die am stromaufwärtigen Ende 70 der Formstrecke 2 in die Form eintreten und dort mittels Überdruck bzw. Vakuum und gegebenenfalls Stützluft zu einem Verbund-Rohr 71 verformt werden, das eine glatte Innenwandung und eine äußere Wellung 72 aufweist, wie es im einzelnen aus der EP 0 563 575 A1 (entspr. US-PS 5,320,797) bekannt ist, worauf verwiesen werden darf. Alternativ können auch einwandige Wellrohre oder Rippenrohre geformt werden.

Wenn jeweils in größeren Abständen am Rohr 71 ein von der Wellung 72 abweichendes Profil, beispielsweise eine Muffe 73, erzeugt werden soll, dann muss hierfür ein Paar Sonder-Formabschnitts-Hälften, beispielsweise also ein Paar von Muffen-Formabschnitts-Hälften 74, 75 in die Formstrecke 2 eingeschleust werden. Diese Formabschnitts-Hälften 74, 75 werden in Parkpositionen 76, 77 geparkt, die durch Sockel 78, 79 gebildet sind, auf denen diese Formabschnitts-Hälften 74, 75 abgestellt werden, wenn sie nicht in den Rohr-Form-Prozess eingebunden sind. Diese Parkpositionen 76, 77 befinden sich benachbart zum Ende 69 der Vorrichtung. Die Hilfs-Transporteinrichtung 29' dient dazu, diese Formabschnitts-Hälften 74, 75 vom stromabwärtigen Ende 68 der Formstrecke 2 zu ihren Parkpositionen 76, 77 zu bringen.

Die aus den Formabschnitten 3 bestehende Form wandert in Produktionsrichtung 6 vor. Das in ihr erzeugte Rohr 71 wandert mit gleicher Geschwindigkeit mit. Wenn jeweils ein Formabschnitt 3 das stromabwärtige Ende 68 der Formstrecke 2 erreicht hat, müssen die beiden diesen Formabschnitt 3 bildenden Formabschnitts-Hälften 4, 5 quer zur Produktionsrichtung 6 aus der Formstrecke 2 herausgenommen werden. Dies geschieht - wie in Fig. 1 dargestellt ist - mittels der durch die Transport-Wagen 44, 45 mit Transportarmen 53 gebildeten Querfördereinrichtungen. Die Transport-Brücke 34 ist gegenüber dem in Produktionsrichtung 6 letzten Formabschnitt 3 in Produktionsrichtung 6 vorgeeilt. Wenn dieser letzte Formabschnitt 3 das stromabwärtige Ende 68 der Formstrecke 3 erreicht, werden die Haltevorrichtungen 54 mit den Halte-Widerlagern 55 der beiden Formabschnitts-Hälften 4, 5 verriegelt. In dieser einander benachbarten Position sind die Transport-Wagen 44, 45 über die Näherungsschalter 67 angehalten worden. Die Transport-Brücke 34 fährt anschließend mit den die Form bildenden Formabschnitten 3 geschwindigkeitsgleich in Produktionsrichtung 6 weiter, wobei die beiden Transport-Wagen 44, 45 samt den mit ihnen verriegelten Formabschnitts-Hälften 4, 5 auseinandergefahren werden. Diese Bewegung wird durch eine entsprechende Ansteuerung des GetriebeMotors 52 durch ein entsprechendes Signal des Näherungsschalters 63 eingeleitet. Die Formabschnitts-Hälften 4, 5 befinden sich hierbei bereits stromabwärts, also außerhalb der Führungsleisten 12, 13. Aufgrund der Neigung der beiden Brücken-Abschnitte 42, 43 werden die an den Transportarmen 53 gehaltenen Formabschnitts-Hälften 4, 5 von der Grundplatte 1 abgehoben und reibungsfrei nach außen verfahren. Wenn die Transport-Wagen 44, 45 die äußeren Näherungsschalter 66 erreichen, werden sie angehalten. Die Getriebe-Motoren 39, 40 werden angesteuert, so dass die Transport-Brücke 34 entgegen der Produktionsrichtung 6 bis zum stromaufwärtigen Ende 70 der Formstrecke 2 verfahren wird. Auch bei diesem Transport der Formabschnitts-Hälften 4, 5 entgegen der Produktionsrichtung 6 stehen diese nicht in Berührung mit der Grundplatte 1, sondern befinden sich reibungsfrei oberhalb von dieser. Sie werden immer parallel zu sich selbst bewegt.

Bei Erreichen der stromaufwärtigen Näherungsschalter 62 werden die Getriebe-Motoren 39, 40 gestoppt, so dass die Transport-Brücke 34 stillsteht. Es wird dagegen der Getriebe-Motor 52 eingeschaltet und verfährt die Transport-Wagen 44, 45 nach innen zur Formstrecke hin und führt die beiden Formabschnitts-Hälften 4, 5 am stromaufwärtigen Ende 70 quer zur Produktionsrichtung 6 in die Formstrecke 2 ein, wie in Fig. 1 gestrichelt dargestellt ist. Beim Verfahren der Transport-Wagen 44, 45 zur Formstrecke 2 hin werden aufgrund der Neigung der Brücken-Abschnitte 42, 43 die Formabschnitts-Hälften 4, 5 wieder zur Grundplatte 1 hin abgesenkt, auf der sie zur Auflage kommen, wenn die beiden Formabschnitts-Hälften 4, 5 eines Formabschnitts 3 einander berühren, wie es in Fig. 2 dargestellt ist. Anschließend wird die Transport-Brücke 34 in Produktionsrichtung 6 verfahren bis die beiden bereits einen Formabschnitt 3 bildenden Formabschnitts-Hälften 4, 5 an den in Produktionsrichtung 6 voreilenden Formabschnitts-Hälften 4, 5 zur Anlage kommen und von den Antriebsritzeln 8 und 16 erfasst und weitergefördert werden. Dann werden die Spannvorrichtungen 57 gelöst und die Transportarme 53 jeweils wieder von der Formstrecke weg nach außen verfahren. Die Transport-Brücke 34 wird anschließend wieder bis zum stromabwärtigen Ende 69 verfahren, wie zuvor bereits beschrieben worden ist.

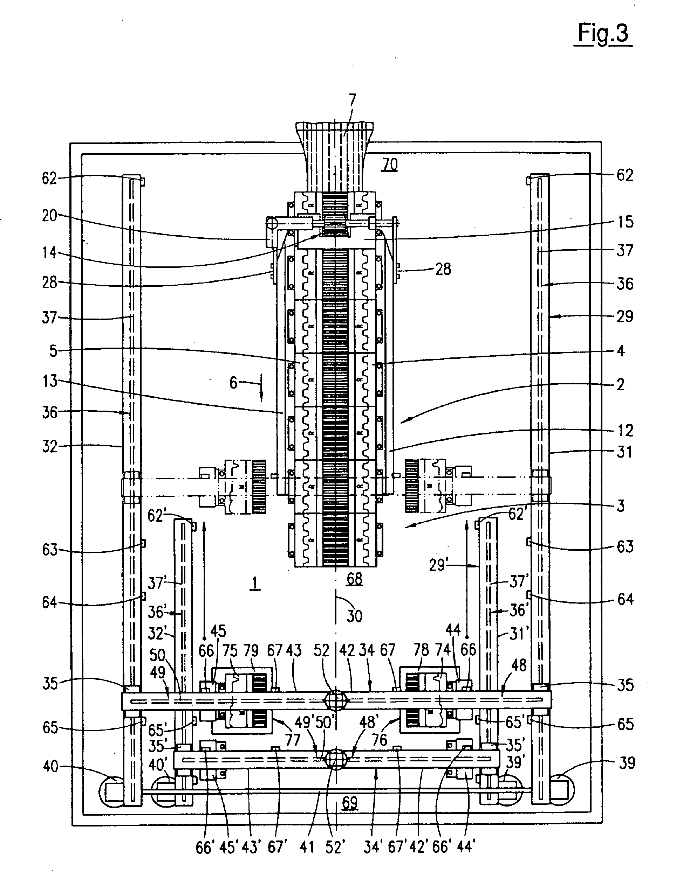

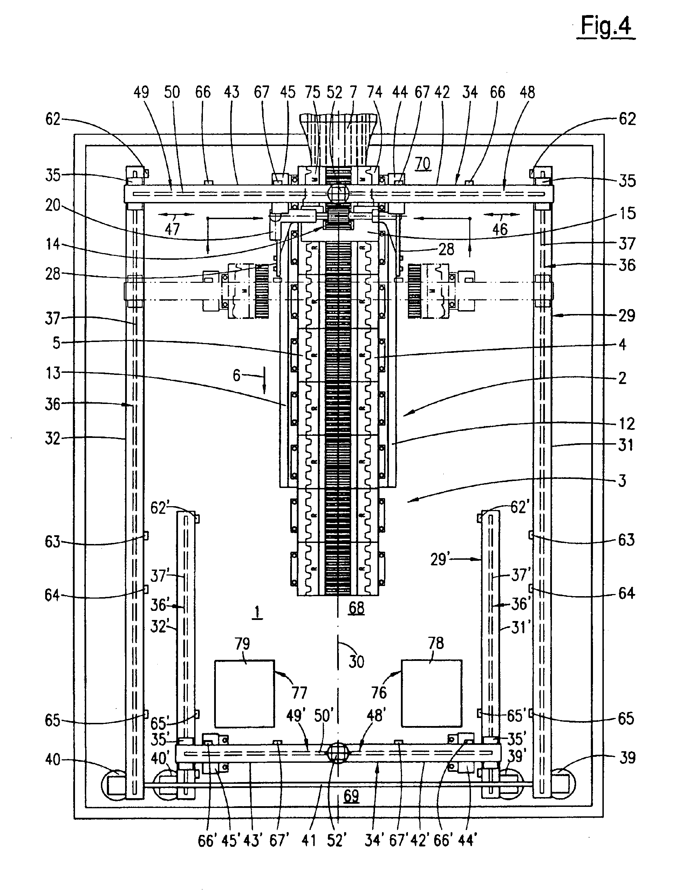

Wenn eine Muffe 73 in dem fortlaufenden Rohr 71 ausgeformt werden soll, dann wird die Haupt-Transportvorrichtung 29 gemäß Fig. 3 in die dort ausgestrichen dargestellte Position verfahren, in der sie die Muffen-Formabschnitts-Hälften 74, 75 in ihren Parkpositionen 76, 77 aufnehmen kann. Diese befinden sich - wie die Zeichnung erkennen lässt - innerhalb der Führungs-Schienen 31', 32' der Hilfs-Transportvorrichtung 29'. Die Längsbewegung der Haupt-Transportvorrichtung 29 in Richtung zum Ende 69 der Vorrichtung wird durch die Näherungsschalter 65 gestoppt. Das Aufnehmen der Muffen-Formabschnitts-Hälften 74, 75 erfolgt in der bereits für die Formabschnitts-Hälften 4, 5 geschilderten Weise. Anschließend werden die Muffen-Formabschnitts-Hälften 74, 75 über die in Fig. 3 gestrichelt dargestellte Position hinaus und die in Fig. 4 gestrichelt dargestellte Zwischenposition bis in die Endlage am stromaufwärtigen Ende 70 verfahren. Letztere Position der Haupt-Transportvorrichtung 29 ist hierbei in Fig. 4 ausgezogen dargestellt. Die Muffen-Formabschnitts-Hälften 74, 75 werden in der bereits geschilderten Weise in die Formstrecke 2 eingeschleust.

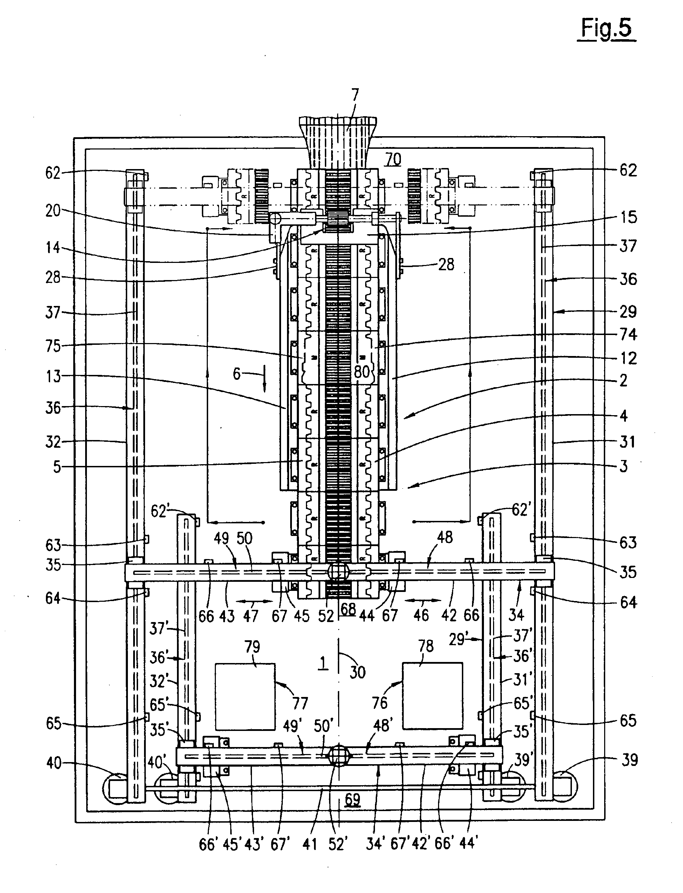

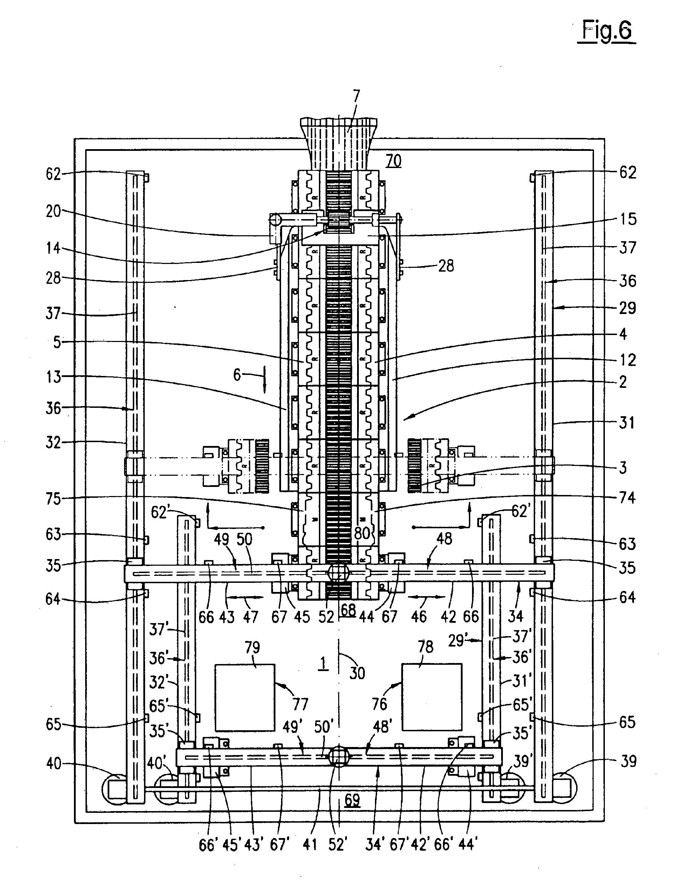

Wie Fig. 5 erkennen lässt, wandert der durch die Muffen-Formabschnitts-Hälften 74, 75 gebildete Muffen-Formabschnitt 80 in Produktionsrichtung 6 in der Formstrecke 2 stromabwärts zum stromabwärtigen Ende 68. Wie die Fig. 4 und 5 ebenfalls erkennen lassen, befindet sich jetzt ein Formabschnitt 80 mehr als zuvor in der Formstrecke 2, da beim Einführen der zusätzlichen Muffen-Formabschnitts-Hälften 74, 75 nicht ein Paar von Formabschnitts-Hälften 4, 5 aus der Produktion herausgenommen wurde. Während der Muffen-Formabschnitt 80 noch in der Formstrecke 2 in Produktionsrichtung 6 transportiert wird, wird jeweils wieder am stromabwärtigen Ende 68 ein Paar von Formabschnitts-Hälften 4, 5 entnommen und zurück zum stromaufwärtigen Ende 70 transportiert und dort in die Formstrecke 2 eingeführt. Dies setzt sich fort, bis - wie in Fig. 6 dargestellt - das letzte den Muffen-Formabschnitts-Hälften 74, 75 in Produktionsrichtung 6 vorgeordnete Paar von Formabschnitts-Hälften 4, 5 aus der immer noch verlängerten Formstrecke 2 herausgenommen und zurück zum stromaufwärtigen Ende 70 gefördert und dort in die Formstrecke 2 eingeschleust wird. Bis zu diesem Zeitpunkt befindet sich die Hilfs-Transportbrücke 34' wie den Fig. 1 und 3 bis 6 entnehmbar ist, zwischen den Parkpositionen 76, 77 und dem Ende 69 der Vorrichtung, kommt also zu keinem Zeitpunkt, und zwar auch nicht bei der Aufnahme der Muffen-Formabschnitts-Hälften 74, 75, mit der Haupt-Transportbrücke 34 in Kollision.

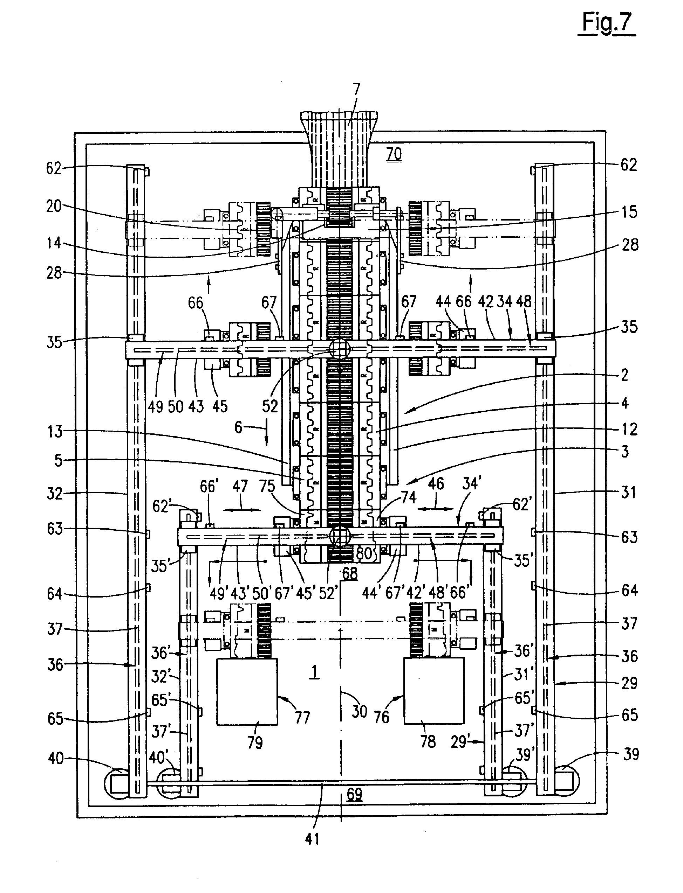

Wenn gemäß der Darstellung in den Fig. 6 und 7 das letzte Paar von Formabschnitts-Hälften 4, 5, die den Muffen-Formabschnitts-Hälften 74, 75 in Produktionsrichtung 6 vorgeordnet waren, noch zum stromaufwärtigen Ende 70 der Formstrecke 2 zurücktransportiert wird, wird die Hilfs-Transport-Vorrichtung 29' in Gang gesetzt und fährt bis zum stromabwärtigen Ende 68 vor, wo sie durch entsprechende Signale der Näherungsschalter 62' angehalten wird. Die Transport-Wagen 44', 45' werden aufeinander zu nach innen gefahren, durch Näherungsschalter 67' angehalten und die TransportArme 53' mit den Muffen-Formabschnitts-Hälften 74, 75 verriegelt. Die Transport-Wagen 44', 45 werden anschließend nach außen verfahren und durch die Näherungsschalter 66' gestoppt. Dann wird die Hilfs-Transportvorrichtung 29' in Produktionsrichtung zu den Parkpositionen 76, 77 zurückverfahren, wo die Muffen-Formabschnitts-Hälften 74, 75 auf den Sockeln 78, 79 abgesetzt werden. Die Hilfs-Transportvorrichtung 29' wird an den Parkpositionen 76, 77 durch Näherungsschalter 65' angehalten. Der gesamte Vorgang läuft zeitgleich mit dem Rück-Transport der letzten den Muffen-Formabschnitts-Hälften 74, 75 voreilenden Formabschnitts-Hälften 4, 5 zum stromaufwärtigen Ende 70 und dem Einschleusen in die Formstrecke 2 ab. Für die Entnahme und den Abtransport der Muffen-Formabschnitts-Hälften 74, 75 aus der Formstrecke 2 wird also keinerlei zusätzliche Zeit benötigt.

## Patentansprüche

1. Verfahren zur Herstellung von Rohren (71) aus thermoplastischem Kunststoff mit Querprofilierung, mit im Anschluss an einen Spritzkopf (7) in zwei einander gegenüberliegenden Reihen angeordneten, im Kreislauf geführten Formabschnitts-Hälften (4, 5), die sich paarweise entlang einer geraden Formstrecke (2) zu einer geschlossenen Hohlform ergänzen,
wobei jede der nicht miteinander verbundenen Formabschnitts-Hälften (4, 5) einer Reihe mittels einer Transportvorrichtung (29) am stromabwärtigen Ende (68) der Formstrecke (2) im Wesentlichen quer zur Produktionsrichtung (6) aus der Formstrecke (2) herausgeführt und zum stromaufwärtigen Ende (70) der Formstrecke (2) zurückgeführt und dort wieder in die Formstrecke (2) eingeschleust wird,
wobei stromabwärts des stromabwärtigen Endes (68) der Formstrecke (2) und beiderseits von dieser jeweils eine zusätzliche Formabschnitts-Hälfte (74, 75) in einer Parkposition (76, 77) geparkt wird, die mittels der Transportvorrichtung (29) in die Formstrecke (2) einführbar ist,
**dadurch kennzeichnet,**
**dass** die zusätzlichen Formabschnitts-Hälften (74, 75) mittels einer gegenüber der als Haupt-Transportvorrichtung (29) dienenden Transportvorrichtung gesonderten Hilfs-Transport-Vorrichtung (29') am stromabwärtigen Ende (68) aus der Formstrecke (2) entnommen und in die Parkpositionen (76, 77) transportiert werden, während ein den zusätzlichen Formabschnitts-Hälften (74, 75) in der Formstrecke (2) in Produktionsrichtung (6) unmittelbar vorgeordnetes Paar von Formabschnitts-Hälften (4, 5) zum stromaufwärtigen Ende (70) der Formstrecke (2) zurücktransportiert und in die Formstrecke (2) eingeschleust wird.

2. Verfahren nach Anspruch 1, **dadurch gekennzeichnet,**
**dass** als zusätzliche Formabschnitts-Hälften Muffen-Formabschnitts-Hälften (74, 75) verwendet werden.

3. Vorrichtung zur Durchführung des Verfahrens nach Anspruch 1 oder 2, mit im Anschluss an einen Spritzkopf (7) in zwei einander gegenüberliegenden Reihen angeordneten, im Kreislauf führbaren Formabschnitts-Hälften (4, 5), die sich paarweise entlang einer geraden Formstrecke (2) zu einer geschlossenen Hohlform ergänzen,
mit einer Transportvorrichtung (29) zum Herausführen der nicht miteinander verbundenen Formabschnitts-Hälften (4, 5) einer Reihe am stromabwärtigen Ende (68) der Formstrecke (2) im Wesentlichen quer zur Produktionsrichtung (6) aus der Formstrecke (2) und zum Zurückführen zum stromaufwärtigen Ende (70) der Formstrecke (2) und zum dortigen Wieder-Einschleusen in die Formstrecke (2),
wobei stromabwärts des stromabwärtigen Endes (68) der Formstrecke (2) und beiderseits von dieser jeweils für eine Parkposition (76, 77) eine zusätzliche Formabschnitts-Hälfte (74, 75) vorgesehen ist,
**dadurch gekennzeichnet,**
**dass** stromabwärts der Formstrecke (2) eine Hilfs-Transportvorrichtung (29') zur Entnahme der zusätzlichen Formabschnitts-Hälften (74, 75) aus der Formstrecke (2) an deren stromabwärtigem Ende (68) und zum Transport dieser zusätzlichen Formabschnitts-Hälften (74, 75) zu ihren Parkpositionen (76, 77) vorgesehen ist.

4. Vorrichtung nach Anspruch 3, **dadurch gekennzeichnet,**
**dass** die Haupt-Transportvorrichtung (29) nach Art eines Brückenkranes ausgebildet ist, der eine parallel zur Produktionsrichtung (6) verfahrbare, die Formstrecke (2) übergreifende Transport-Brücke (34), zwei auf der Transport-Brücke (34) angeordnete, quer zur Produktionsrichtung (6) und gegensinnig zueinander verfahrbare Transport-Wagen (44, 45) und an jedem Transport-Wagen (44, 45) einen nach unten zur Grundplatte (1) gerichteten Transportarm (53) mit einer Haltevorrichtung (54) für je eine Formabschnitts-Hälfte (4, 5) aufweist.

5. Vorrichtung nach Anspruch 4, **dadurch gekennzeichnet,**
**dass** die Hilfs-Transportvorrichtung (29') nach Art eines Brückenkranes ausgebildet ist, der eine parallel zur Produktionsrichtung (6) verfahrbare, die Formstrecke (2) übergreifende Transport-Brücke (34'), zwei auf der Transport-Brücke (34') angeordnete, quer zur Produktionsrichtung (6) und gegensinnig zueinander verfahrbare Transport-Wagen (44', 45') und an jedem Transport-Wagen (44', 45') einen nach unten zur Grundplatte (1) gerichteten Transportarm (53') mit einer Haltevorrichtung (54') für je eine zusätzliche Formabschnitts-Hälfte (74, 75) aufweist.

## Claims

1. Method of producing pipes (71) having a transverse profile from thermoplastic material by means of circulating mold segment halves (4, 5) which are arranged in two opposite rows downstream of an extrusion head (7) and combine in pairs to form a closed hollow mold along a linear molding path (2),
wherein each of the unconnected mold segment halves (4, 5) of a row are guided out of the molding path (2) at a downstream end (68) in a direction substantially at right angles to a direction of production (6) by means of a conveying device (29) and are guided back to the upstream end (70) of the molding path (2) where they are re-fed into the molding path (2),
wherein downstream of the downstream end (68) of the molding path (2) and on both sides thereof, a respective additional mold segment half (74, 75) is stored in a parking position (76, 77), the additional mold segment half (74, 75) being feedable into the molding path (2) by means of the conveying device (29),
**characterized**
**in that** the additional mold segment halves (74, 75) are removed from the molding path (2) at the downstream end (68) by means of a auxiliary conveying device (29'), which is separate from the conveying device acting as main conveying device (29), before being moved to the parking positions (76, 77) while a pair of mold segment halves (4, 5), which is disposed directly upstream of the additional mold segment halves (74, 75) in the molding path (2) when seen in the direction of production (6), is returned to the upstream end (70) of the molding path (2) where it is fed into the molding path (2).

2. Method according to claim 1, **characterized**
**in that** socket mold segment halves (74, 75) are used as additional mold segment halves.

3. Apparatus for implementation of the method according to claim 1 or 2, comprising two circulating mold segment halves (4, 5) which are arranged in two opposite rows downstream of an extrusion head (7) and combine in pairs to form a closed hollow mold along a linear molding path (2),
comprising a conveying device (29) for guiding the unconnected mold segment halves (4, 5) of a row out of the molding path (2) at a downstream end (68) in a direction substantially at right angles to the direction of production (6) and for guiding them back to the upstream end (70) of the molding path (2) and for local re-feeding into the molding path (2),
wherein downstream of the downstream end (68) of the molding path (2) and on both sides thereof, a respective additional mold segment half (74, 75) is stored in a parking position (76, 77),
**characterized**
**in that** downstream of the molding path (2) is provided an auxiliary conveying device (29') for removing the additional mold segment halves (74, 75) from the molding path (2) at the downstream end (68) thereof and for moving these additional mold segment halves (74, 75) to their parking positions (76, 77).

4. Apparatus according to claim 3, **characterized**
**in that** the main conveying device (29) is formed like a gantry crane which comprises a conveying bridge (34) that is displaceable parallel to the direction of production (6) and encompasses the molding path (2); two conveying carriages (44, 45) that are arranged on the conveying bridge (34) and are displaceable at right angles to the direction of production (6) and in opposite directions relative to each other, and a conveying arm (53) on each conveying carriage (44, 45), wherein the conveying arm (53) comprises a holding device (54) for in each case one mold segment half (4, 5) and faces downwards towards the base plate (1).

5. Apparatus according to claim 4, **characterized**
**in that** the auxiliary conveying device (29') is formed like a gantry crane which comprises a conveying bridge (34') that is displaceable parallel to the direction of production (6) and encompasses the molding path (2); two conveying carriages (44', 45') that are arranged on the conveying bridge (34') and are displaceable at right angles to the direction of production (6) and in opposite directions relative to each other; and a conveying arm (53') on each conveying carriage (44', 45'), wherein the conveying arm (53) comprises a holding device (54') for in each case one mold segment half (74, 75) and faces downwards towards the base plate (1).

## Revendications

1. Procédé de fabrication de tuyaux (71) en matière synthétique thermoplastique dotés d'un profilage transversal, comprenant, au niveau de la jonction à une tête de pulvérisation (7), des demies portions de moule (4, 5), disposées sur deux rangées se faisant face, agencées en cercle, qui se complètent pour former un moule creux le long d'un circuit de moulage (2) rectiligne,
où, les demies portions de moule (4, 5) d'une rangée, qui ne sont pas reliées ensemble, sont respectivement prélevées sur le circuit de moulage (2), essentiellement de manière perpendiculaire par rapport au sens de production (6), à l'extrémité en aval (68) du circuit de moulage (2), au moyen d'un dispositif de transport (29), et sont ramenées à l'extrémité en amont (70) du circuit de moulage (2), et sont de nouveau réinsérées sur le circuit de moulage (2) à cet endroit,
où, en aval de l'extrémité en aval (68) du circuit de moulage (2), et de chaque côté de celui-ci, une demie portion de moule complémentaire (74, 75) est respectivement rangée dans une position de dépôt (76, 77), qui permet l'accès dans le circuit de moulage (2) au moyen du dispositif de transport (29),
**caractérisé en ce**
**que** les demies portions de moule complémentaires (74, 75) sont prélevées sur le circuit de moulage (2) à l'extrémité en aval (68) au moyen d'un dispositif de transport auxiliaire (29'), séparé par rapport au dispositif de transport servant de dispositif de transport principal (29), et sont transportées dans les positions de dépôt (76, 77), pendant qu'une paire de demies portions de moule (4, 5), disposée immédiatement avant les demies portions de moules complémentaires (74, 75) dans le sens de production (6), est de nouveau transportée à l'extrémité en amont (70) du circuit de moulage (2) et est réinsérée dans le circuit de moulage (2).

2. Procédé selon la revendication 1, **caractérisé en ce**
**que** des demies portions de moule sous forme de manchons sont employées en tant que demies portions de moule complémentaires (74, 75).

3. Dispositif destiné à exécuter le procédé selon les revendications 1 ou 2, comprenant, au niveau de la jonction à une tête de pulvérisation (7), des demies portions de moule (4, 5) disposées sur deux rangées se faisant face, agencées en cercle, qui se complètent par paires pour former un moule creux le long d'un circuit de moulage (2) rectiligne,
comprenant un dispositif de transport (29) destiné à exclure du circuit de moulage (2) les demies portions de moule (4, 5) d'une rangée non reliées entre elles à l'extrémité en aval (68) du circuit de moulage (2), essentiellement de manière perpendiculaire par rapport au sens de production (6), et à les ramener à l'extrémité en amont (70) du circuit de moulage (2), et à les réinsérer de nouveau dans le circuit de moulage (2) à cet endroit,
une demie portion de moule complémentaire (74, 75) étant chaque fois prévue pour une position de dépôt (76, 77) en aval de l'extrémité en aval (68) du circuit de moulage (2) et des deux côtés de celui-ci,
**caractérisé en ce**
**qu'**en aval du circuit de moulage (2), un dispositif de transport auxiliaire (29') est prévu pour le prélèvement à partir du circuit de moulage (2) des demies portions de moule complémentaires (74, 75) à leurs extrémités en aval (68) et pour le transport de ces demies portions de moule complémentaires (74, 75) vers leur position de dépôt (76, 77.

4. Dispositif selon la revendication 3, **caractérisé en ce**
**que** le dispositif de transport principal (29) est conçu à la manière d'un pont-grue, qui présente un pont (34) de transport, pouvant se déplacer parallèlement au sens de production (6), passant par dessus le circuit de moulage (2), deux chariots (44, 45) de transport disposés sur le pont (34) de transport, pouvant se déplacer perpendiculairement par rapport au sens de transport (6) et en sens contraires l'un par rapport à l'autre, et un bras (53) de transport sur chaque chariot (44, 45) de transport, orienté vers le bas vers le plateau de base (1), comportant un dispositif de fixation (54) pour chacune des demies portions de moule (4, 5).

5. Dispositif selon la revendication 4, **caractérisé en ce**
**que** le dispositif de transport auxiliaire (29') est conçu à la manière d'un pont-grue, qui présente un pont (34') de transport, pouvant se déplacer parallèlement au sens de production (6), passant par dessus le circuit de moulage (2), deux chariots (44', 45') de transport disposés sur le pont (34') de transport, pouvant se déplacer perpendiculairement par rapport au sens de transport (6) et en sens contraires l'un par rapport à l'autre, et un bras (53') de transport sur chaque chariot (44', 45') de transport, orienté vers le bas vers le plateau de base (1), comportant un dispositif de fixation (54') pour chacune des demies portions de moule complémentaires (74, 75).
